# NEUE EUROPÄISCHE PATENTSCHRIFT

(11) **EP 1 028 273 B2**
(45) Veröffentlichungstag und Bekanntmachung des Hinweises auf die Entscheidung über den Einspruch: **09.07.2008**
(45) Hinweis auf die Patenterteilung: 27.10.2004
(21) Anmeldenummer: 00100294.8
(22) Anmeldetag: 20.01.2000
(51) Int. Cl.: F16H 48/08

(54) **Ausgleichsgetriebe**
Differential gearing
Engrenage compensateur

(30) Priorität: 09.02.1999 DE 19905306
(43) Veröffentlichungstag der Anmeldung: 16.08.2000
(73) Patentinhaber: Volkswagen Aktiengesellschaft, 38436 Wolfsburg (DE)
(72) Erfinder: Bornholdt, Wilhelm, 38444 Wolfsburg (DE); Heise, Wolfgang, 38165 Lehre (DE)
(74) Vertreter: Schneider, Peter Christian

(56) Entgegenhaltungen:
- EP-A- 0 864 779
- DE-A- 4 120 475
- DE-U- 1 851 426
- FR-A- 2 682 732
- US-A- 3 955 443

## Beschreibung

Die vorliegende Erfindung betrifft ein Ausgleichsgetriebe mit einem Planetenträger, einem ersten Kegelrad sowie einem zweiten Kegelrad, welche jeweils relativ zueinander drehbar auf einer zentralen Rotationsachse angeordnet sind, mit mindestens drei Ausgleichsrädern, welche in einer senkrecht zur zentralen Rotationsachse und zwischen den beiden Kegelrädern liegende Ebene zueinander beabstandet um die zentrale Rotationsachse herum angeordnet sind und jeweils das erste und das zweite Kegelrad miteinander koppeln, mit mindestens drei Bolzen, welche an ihrem einen Ende jeweils am Planetenträger gelagert sind und auf denen die Ausgleichsräder um ihre jeweilige eigene Rotationsachse drehbar angeordnet sind, wobei das Ausgleichsgetriebe einen Hauptbolzen besitzt, der an beiden seiner Enden am Planetenträger gelagert ist, und mindestens einen Kurzbolzen, zu dessen Lagerung mit seinem anderen Ende an einem der oder dem übrigen Kurzbolzen ein Stützelement vorgesehen ist. Ein solches Ausgleichsgetriebe ist im gattungsgemäßen DE 1 851 426 U beschrieben.

Gattungsgemäße Getriebe werden beispielsweise in Kraftfahrzeugen zur Übertragung von Drehmomenten eingesetzt.

Es ist bekannt, solche Ausgleichsgetriebe mit zwei oder vier Ausgleichsrädern auszustatten. Weist das Ausgleichsgetriebe lediglich zwei Ausgleichsräder auf, so ist aufgrund der relativ starken punktuellen Belastung das gesamte Getriebe verhältnismäßig groß zu dimensionieren. Werden die Getriebe dagegen mit vier Ausgleichsrädern ausgestattet, so führt dies zu einem Überkreuzen der Bolzen, auf denen die Ausgleichsräder montiert werden. Um bei einer solchen Bauweise eine Montage zu ermöglichen, muss das Getriebe in der Ebene der überkreuzten Bolzen geteilt werden. Die dadurch erforderlichen Flanschränder und Verschraubungen führen ebenfalls zu einer eher großvolumigen Bauform.

Aus der DE 196 31 937 A1 ist bekannt, ein Ausgleichsgetriebe mit drei Ausgleichsrädern auszustatten. Dazu ist ein zentrales Tragstück vorgesehen, an dem drei Bolzen jeweils um 120 Grad zueinander versetzt in einer Ebene montiert sind. Jeder dieser Bolzen trägt ein Ausgleichsrad. Nachteilig ist dabei die aufwendige Verschraubung im Tragstück und die Gewährleistung der Sicherheit der Verschraubung trotz starker Vibrationen im Getriebe.

Es besteht deshalb das Problem, ein kompaktes und sicheres Getriebe zu gestalten.

Das Problem wird unter Hinzunahme der gattungsbildenden Merkmale des Oberbegriffes des Anspruches 1 dadurch gelöst, dass das Stützelement (50) zum Hauptbolzen beabstandet abgestützt ist.

Dadurch, dass der Kurzbolzen an einem weiteren Kurzbolzen gelagert ist, wird eine Überlastung des Hauptbolzens vermieden.

Dadurch, dass zur Lagerung des bzw. der Kurzbolzen an einem anderen Bolzen ein Stützelement vorgesehen ist, bleibt die Form der Kurzbolzen und somit ihre Fertigung einfach.

Eine günstige Ausführungsform kann sich dadurch ergeben, dass das Stützelement Bohrungen besitzt, in welche die Kurzbolzen einsteckbar sind. Dies erlaubt eine schnelle Montage.

Dadurch, dass das Stützelement zum Hauptbolzen beabstandet, also nicht am Hauptbolzen abgestützt ist, wird eine Entlastung des Hauptbolzens ermöglicht.

Es kann zweckmäßig sein, wenn die am Planetenträger gelagerten Enden der Bolzen lösbar am Planetenträger befestigt sind. Dies erlaubt eine sichere Befestigung und eine spätere Demontage.

Es kann von Vorteil sein, wenn zur Befestigung ein Spannstift vorgesehen ist. Dies stellt eine kostengünstige und zuverlässige Befestigung dar.

Details der Erfindung werden in der nachfolgenden Beschreibung, der lediglich beispielhafter Charakter zukommt, erläutert. Es wird dabei Bezug genommen auf:

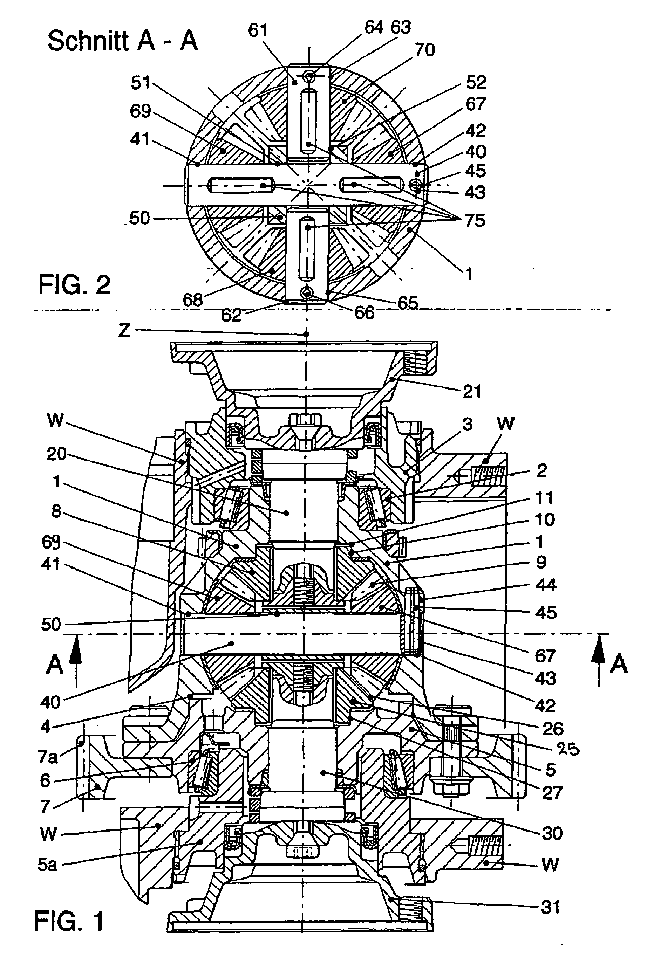

**Fig.1** ein Längsschnitt durch ein Ausführungsbeispiel eines Ausgleichsgetriebes;
**Fig. 2** ein Querschnitt entlang der Linie A-A von Figur 1, wobei die Fig. 1 und 2 nicht vollumfänglich im Einklang mit dem Wortlaut des Anspruchs 1 stehen.

Das Ausgleichsgetriebe der vorliegenden Ausführungsform besitzt einen als becherartiges Gehäuse ausgestalteten Planetenträger 1. Der Planetenträger 1 ist an seinem einen Ende über ein Lager 2 und einen Deckel 3 an einer Wandung W des Getriebes um eine zentrale Rotationsachse Z drehbar gelagert.

Das gegenüberliegende Ende des Planetenträgers 1 besitzt eine zentrale, kreisförmige Öffnung 4, die durch einen Flansch 5 verschlossen ist. Der Flansch 5 ist über ein Lager 6 und einen Deckel 5a ebenfalls an der Getriebewandung W um die zentrale Rotationsachse Z drehbar gelagert.

Am Flansch 5 ist konzentrisch zur zentralen Rotationsachse Z ein Zahnrad 7, welches eine Außenverzahnung 7a aufweist, drehfest angebracht. Im gehäuseförmigen Planetenträger 1 ist ein erstes Kegelrad 8 konzentrisch zur zentralen Rotationsachse Z aufgenommen. Seine zum Flansch 5 weisende Seite ist mit einer kegelförmigen Verzahnung 9 versehen. Seine zum Lager 2 weisende Seite besitzt eine rotationssymmetrische Schulter 10. Diese ist in einer korrespondierenden konzentrischen Öffnung 11 des Planetenträgers 1 aufgenommen.

Das Kegelrad 8 ist drehfest am Ende einer Welle 20 befestigt. Die Welle 20 verläuft ausgehend vom Kegelrad 8 entlang der zentralen Rotationsachse Z und durchdringt den becherförmigen Planetenträger 1 in seinem Bodenbereich sowie den Deckel 3. Sie ist an ihrem anderen Ende außerhalb der Getriebewandung W des Getriebes drehfest mit einem Kupplungsflansch 21 verbunden.

Dem Kegelrad 8 in Richtung auf das Lager 6 gegenüberliegend und ebenfalls konzentrisch zur zentralen Rotationsachse Z ist ein zweites Kegelrad 25 vorgesehen. Dessen zum Kegelrad 8 weisende Seite ist mit einer kegelförmigen Verzahnung 26 versehen. Seine zum Flansch 5 weisende Seite besitzt eine rotationssymmetrische Schulter 27. Diese ist in einer korrespondierenden konzentrischen Öffnung 28 des Flansches 5 aufgenommen.

Das Kegelrad 25 ist drehfest mit einem Ende einer zweiten Welle 30 verbunden. Die Welle 30 verläuft ausgehend vom Kegelrad 25 entlang der zentralen Rotationsachse Z und durchdringt den Flansch 5 und den Deckel 5a. An ihrem dem Kegelrad 25 gegenüberliegenden Ende ist die Welle 30 mit einem außerhalb der Wandung W des Getriebes befindlichen Kupplungsflansch 31 drehfest verbunden.

Zwischen dem ersten Kegelrad 8 und dem zweiten Kegelrad 25 verläuft ein Hauptbolzen 40 senkrecht durch die zentrale Rotationsachse Z in einer Ebene, die senkrecht auf der zentralen Rotationsachse Z steht. Dieser Hauptbolzen 40 ist an seinem einen Ende in einer Öffnung 41 des Planetenträgers 1, die in etwa den gleichen Durchmesser wie der Bolzen 40 aufweist, aufgenommen. Sein gegenüberliegendes Ende ist in einer zweiten Öffnung 42 des Planetenträgers 1 aufgenommen, die ebenfalls in etwa den gleichen Durchmesser wie der Bolzen 40 aufweist. An diesem Ende besitzt der Hauptbolzen 40 außerdem eine senkrechte Bohrung 43. Fluchtend zur Bohrung 43 ist im Planetenträger 1 eine Bohrung 44 vorgesehen. Durch Einpressen eines Spannstiftes 45 in die Bohrungen 43, 44 wird der Hauptbolzen 40 am Planetenträger 1 fixiert.

Der Hauptbolzen 40 trägt axial in seiner Mitte ein blockförmiges Stützelement 50. Dazu ist im Stützelement 50 eine durchgehende Bohrung 51 vorgesehen, in welcher der Hauptbolzen 40 aufgenommen ist.

Senkrecht durch die Bohrung 51 und senkrecht zur zentralen Rotationsachse Z verläuft eine zweite durchgehende Bohrung 52 durch das Stützelement 50.

Auf der einen Seite dieser Bohrung 52 ist ein Ende eines Kurzbolzens 61 aufgenommen. Auf der gegenüber liegenden Seite der Bohrung 52 ist ein Ende eines zweiten Kurzbolzens 62 aufgenommen. Die Kurzbolzen 61, 62 besitzen in etwa den gleichen Durchmesser wie die Bohrung 52. Sie verlaufen ausgehend vom Stützelement 50 senkrecht zur zentralen Rotationsachse Z und senkrecht zum Hauptbolzen 40 zum Planetenträger 1 hin.

Zur Abstützung seines zweiten Endes ist der Kurzbolzen 61 in einer fluchtend zur Öffnung 52 vorgesehenen Bohrung 63 im Planetenträger 1 aufgenommen. Er ist dort wie der Hauptbolzen 40 mit einem senkrecht zum Kurzbolzen 61 verlaufenden Spannstift 64 gesichert. Auch der zweite Kurzbolzen 62 ist seinem zweiten Ende in einer fluchtend zur Öffnung 52 vorgesehenen Bohrung 65 im Planetenträger 1 aufgenommen. Auch er ist mittels eines Spannstiftes 66 fixiert. Die Bohrungen 63, 64 besitzen einen Durchmesser, der in etwa dem Durchmesser der Kurzbolzen 61, 62 entspricht.

Das Stützelement 50 wird somit vom Hauptbolzen 40 getragen. Eine axiale Fixierung ist dabei durch den Eingriff der Kurzbolzen 61 und 62 in die Bohrung 52 des Stützelementes 50 gewährleistet.

Durch den Hauptbolzen 40 und die Kurzbolzen 61 und 62 werden vier jeweils um 90 Grad zueinander versetzte Wellenabschnitte in der Ebene zwischen den Kegelrädern 8 und 25 gebildet. Auf diesen Wellenabschnitten ist jeweils ein Ausgleichsrad 67-70 drehbar angeordnet. Dazu besitzen die Ausgleichsräder 67-70 konzentrisch zu ihrer jeweiligen Rotationsachse eine zentrale Bohrung, die den jeweiligen Bolzen 40, 61, 62 umschließt. Die Ausgleichsräder 67-70 sind dabei so angebracht, dass ihre Verzahnung mit der der Kegelräder 8, 25 in Eingriff steht. Dadurch sind die Kegelräder 8, 25 über jedes der Ausgleichsräder 67-70 miteinander gekoppelt.

Um eine ausreichende Schmierung der Ausgleichsräder 67-70 auch ohne Wälzlager zu gewährleisten, sind Nuten 78 in den Bolzen 40, 61, 62 vorgesehen, welche an der Bolzenoberfläche längs des jeweiligen Bolzens 40, 61, 62 verlaufen.

Die Funktionsweise des Ausgleichsgetriebes entspricht der gattungsgemäßer Ausgleichsgetriebe und ist wie folgt.

Über ein nicht dargestelltes Antriebsrad wird das Zahnrad 7 an seiner Außenverzahnung 7a mit einem Drehmoment beaufschlagt. Dieses Drehmoment wird durch die drehfeste Verschraubung auf den Flansch 5 und den Planetenträger 1 übertragen.

Die im Planetenträger 1 gelagerten Bolzen 40, 61, 62 werden dabei mitgenommen. Über die Verzahnung der Ausgleichsräder 67-70 mit den Kegelrädern 8, 25 wird das Drehmoment auf die Kegelräder 8, 25 übertragen. Dadurch werden über die Wellen 20, 30 die Kupplungsflansche 21, 31 beaufschlagt. Da die Lager 2, 6 eine Drehbarkeit um die zentrale Drehachse Z erlauben, rotiert die gesamte Anordnung.

Sollte eine der beiden Wellen 20, 30 in ihrer Drehbewegung gehemmt werden, so gewährleistet die drehbare Lagerung der Ausgleichsräder 67-70 und die relative Drehbarkeit der Ausgleichsräder 8, 25 zueinander einen unbeeinflussten Antrieb der jeweils ungehemmten Welle 20, 30.

Zur nicht dargestellten erfindungsgemäßen Ausführungsform weist das Stützelement 50 eine vergrößerte Bohrung 51 auf, so dass keine Abstützung des Stützelementes 50 am Hauptbolzen 40 erfolgen würde. Es findet lediglich eine Umgehung des Hauptbolzens 40 statt, um die beiden Kurzbolzen 61 und 62 an ihren Enden miteinander zu verbinden und so aneinander abzustützen. Auf diese Weise wird der Hauptbolzen 40 entlastet. **BEZUGSZEICHENLISTE**
- 1: Planetenträger
- 2: Lager
- 3: Deckel
- 4: Öffnung
- 5: Flansch
- 5a: Deckel
- 6: Lager
- 7: Zahnrad
- 7a: Außenverzahnung
- 8: Kegelrad
- 9: Verzahnung
- 10: Schulter
- 11: Öffnung
- 20: Welle
- 21: Kupplungsflansch
- 25: Kegelrad
- 26: Verzahnung
- 27: Schulter
- 28: Öffnung
- 30: Welle
- 31: Kupplungsflansch
- 40: Hauptbolzen
- 41, 42: Öffnung
- 43, 44: Bohrung
- 45: Spannstift
- 50: Stützelement
- 51,52: Bohrung
- 61 , 62: Kurzbolzen
- 63, 65: Bohrung
- 64, 66: Spannstift
- 67-70: Ausgleichsräder
- 75: Nut
- W: Wandung
- Z: zentrale Rotationsachse .

## Patentansprüche

1. Ausgleichsgetriebe mit einem Planetenträger (1), einem ersten Kegelrad (8) sowie einem zweiten Kegelrad (25), welche jeweils relativ zueinander drehbar auf einer zentralen Rotationsachse (Z) angeordnet sind, mit mindestens drei Ausgleichsrädern (67, 68, 69, 70), welche in einer senkrecht zur zentralen Rotationsachse (Z) und zwischen den beiden Kegelrädern (8, 25) liegende Ebene zueinander beabstandet um die zentrale Rotationsachse (Z) herum angeordnet sind und jeweils das erste und das zweite Kegelrad (8, 25) miteinander koppeln, mit mindestens drei Bolzen (40, 61, 62), welche an ihrem einen Ende jeweils am Planetenträger (1) gelegert sind und auf denen die Ausgleichsräder (67, 68, 69. 70) um ihre jeweilige eigene Rotationsachse drehbar angeordnet sind, wobei das Ausgleichsgetriebe einen Hauptbolzen (40) besitzt, der an beiden seiner Enden am Planetenträger (1) gelagert ist, und mindestens einen Kurzbolzen (61, 62), zu dessen Lagerung mit seinem anderen Ende an einem der oder dem übrigen Kurzbolzen (62, 61) ein Stützelement (50) vorgesehen ist,
**dadurch gekennzeichnet,**
**dass** das Stützelement (50) zum Hauptbolzen beabstandet abgestützt ist.

2. Ausgleichsgetriebe nach Anspruch 1,
**dadurch gekennzeichnet,**
**dass** das Stützelement (50) Bohrungen (51, 52) besitzt, in welche die Kurzbolzen (61, 62) einsteckbar sind.

3. Ausgleichsgetriebe nach einem der vorigen Ansprüche,
**dadurch gekennzeichnet,**
**dass** ein Ende mindestens eines der Bolzen (40, 61, 62) am Planetenträger (1) lösbar befestigt sind.

## Claims

1. Differential gearing with a planet carrier (1), a first bevel wheel (8) and a second bevel wheel (25) which are arranged in each case rotatably relative to one another on a central axis of rotation (Z), with at least three differential wheels (67, 68, 69, 70) which, spaced from one another about the central axis of rotation (Z), are arranged in a plane lying perpendicularly to the central axis of rotation (Z) and between the two bevel wheels (8, 25) and which in each case couple the first and the second bevel wheel (8, 25) to one another, and with at least three bolts (40, 61, 62) which are mounted at one end in each case on the planet carrier (1) and on which the differential wheels (67, 68, 69, 70) are arranged rotatably about their respective specific axis of rotation, the differential gearing possessing a main bolt (40), which is mounted at both of its ends on the planet carrier (1), and at least one short bolt (61, 62), for the mounting of which with its other end a supporting element (50) is provided on one or the other of the short bolts (62, 61), **characterized in that** the supporting element (50) is supported apart from the main bolt.

2. Differential gearing according to Claim 1, **characterized in that** the supporting element (50) possesses bores (51, 52), in which the short bolts (61, 62) can be inserted.

3. Differential gearing according to one of the preceding claims, **characterized in that** one end of at least one of the bolts (40, 61, 62) is fastened releasably to the planet carrier (1).

## Revendications

1. Engrenage différentiel comprenant un porte-satellites (1), un premier pignon conique (8) ainsi qu'un deuxième pignon conique (25), qui sont disposés à chaque fois de manière à pouvoir tourner l'un par rapport à l'autre sur un axe de rotation central (Z), avec au moins trois pignons différentiels (67, 68, 69, 70) qui sont espacés les uns des autres dans un plan situé perpendiculairement à l'axe de rotation central (Z) et entre les deux pignons coniques (8, 25) et disposés autour de l'axe de rotation central (Z) et accouplent à chaque fois le premier pignon conique et le deuxième pignon conique (8, 25) l'un à l'autre, avec au moins trois boulons (40, 61, 62) qui sont montés au niveau de l'une de leurs extrémités à chaque fois sur le porte-satellites (1) et sur lesquels les pignons différentiels (67, 68, 69, 70) sont disposés à rotation autour de leur axe de rotation propre respectif, l'engrenage différentiel présentant un boulon principal (40) qui est monté au niveau de ses deux extrémités sur le porte-satellites (1) et au moins un boulon court (61, 62) pour le montage duquel à son autre extrémité, sur l'un ou l'autre boulon court (62, 61), on prévoit un élément de support (50),
**caractérisé en ce que**
l'élément de support (50) est supporté à distance du boulon principal.

2. Engrenage différentiel selon la revendication 1, **caractérisé en ce que** l'élément de support (50) possède des alésages (51, 52) dans lesquels peuvent être insérés les boulons courts (61, 62).

3. Engrenage différentiel selon l'une quelconque des revendications précédentes, **caractérisé en ce qu'**une extrémité d'au moins un des boulons (40, 61, 62) est fixée de manière desserrable sur le porte-satellites (1).
